# EUROPÄISCHE PATENTSCHRIFT

(11) **EP 2 773 176 B1**
(45) Veröffentlichungstag und Bekanntmachung des Hinweises auf die Patenterteilung: **23.09.2015**
(21) Anmeldenummer: 12786902.2
(22) Anmeldetag: 02.11.2012
(51) Int. Cl.: A01B 15/08, A01B 15/10

(54) **STREICHBLECH FÜR PFLÜGE**
MOLDBOARD FOR PLOWS
VERSOIR POUR CHARRUES

(30) Priorität: 04.11.2011 DE 102011055029
(43) Veröffentlichungstag der Anmeldung: 10.09.2014
(73) Patentinhaber: Amazonen-Werke H. Dreyer GmbH & Co. KG, 49205 Hasbergen (DE)
(72) Erfinder: LAUMANN, Bernhard, 48477 Hörstel-Riesenbeck (DE); RESCH, Rainer, 49170 Hagen a TW (DE)
(86) Internationale Anmeldenummer: PCT/EP2012/071747
(87) Internationale Veröffentlichungsnummer: WO 2013/064653

(56) Entgegenhaltungen:
- EP-A1- 2 153 709
- DE-A1- 19 833 122
- DE-U- 1 780 840
- US-A- 3 995 698

## Beschreibung

Die Erfindung bezieht sich auf ein Streichblech für Pflüge in Vollkörper- oder Streifenkörperausbildung mit einem eine Streichblechoberkante, eine Streichblechunterkante sowie eine Streichblechvorderkante aufweisenden Streichblechhinterteil mit einer in die Streichblechunterkante und in die Streichblechvorderkante übergehenden Ausnehmung, in die ein im Wesentlichen kongruent ausgebildetes Streichblechvorderteil als Austauschteil einsetzbar ist, das im montierten Zustand die Streichblechvorderkante und die Streichblechunterkante des Streichblechhinterteils fortsetzt.

Ein Streichblech der vorgenannten Art ist aus dem LEGERER-Katalog 2010 "Ersatzteile für Bodenbearbeitungsgeräte" der Legerer GmbH, A-2294 Marchegg bekannt. Dabei ist ein mit einer Streichschiene und einem Düngerleitblech zu versehendes Streichblech mit einer im Wesentlichen leicht konvex ausgebildeten Ausnehmung versehen, in die ein entsprechend kongruent im Wesentlichen konkav ausgebildetes Streichblechvorderteil einzusetzen ist. Das Streichblechhinterteil und das Streichblechvorderteil bilden gemeinsam eine Streichblechunterkante und eine Streichblechoberkante, wobei das Streichblechvorderteil räumlich relativ nahe gelegen zur Streichblechoberkante in die Streichblechvorderkante des Streichbleches übergeht. Das Streichblechvorderteil ist als Verschleißteil auszutauschen, ohne das gesamte Streichblech ersetzen zu müssen. Bei höheren Pfluggeschwindigkeiten sind jedoch die Streichblechbeanspruchungen wesentlich erhöht, d.h. es entsteht ein erhöhter Verschleiß. Solchen erhöhten Verschleißerscheinungen kann das bekannte Streichblech mit seinem Streichblechvorderteil nicht mehr im befriedigendem Maße gerecht werden.

Aus der Druckschrift US 3,995,698 A ist eine Schutzvorrichtung für die Verschleißfläche eines Streichblechs bekannt.

Es ist daher Aufgabe der vorliegenden Erfindung, mit einem möglichst geringen zusätzlichen Material- und Bauaufwand ein Streichblech der eingangs genannten Art auch bei höheren Pfluggeschwindigkeiten verschleißunanfälliger auszubilden.

Zur Lösung dieser Aufgabe stellt die Erfindung ein Streichblech mit den Merkmalen des Anspruchs 1 bereit.

Damit ist ein Streichblech für Pflüge in Vollkörper- oder Streifenkörperausbildung zur Verfügung gestellt mit einem wesentlich verbesserten Verschleißbereich, so dass auch erhöhten Beanspruchungen bei höheren Pfluggeschwindigkeiten standgehalten werden kann. Das Streichblech hat insgesamt einen gegenüber dem vorbekannten Stand der Technik wesentlich vergrößerten Verschleißbereich, der hinsichtlich seiner geometrischen Erstreckung in dem Streichblechvorderteil als Austauschteil berücksichtigt ist. Das austauschbare Streichblechvorderteil ist mit seinem gewölbten Bereich mit seinem Scheitel wesentlich gegenüber dem vorbekannten Stand der Technik in den hinteren Bereich des Streichbleches hineingewachsen, so dass die am stärksten während der Bodenbearbeitung in Anspruch genommenen Bereiche durch das Streichblechvorderteil gebildet sind. Die in bevorzugter Weise im wesentlichen konvexe Ausnehmung bzw. das entsprechend in bevorzugter Weise im Wesentlichen konkav kongruent ausgebildete Streichblechvorderteil ist dabei bevorzugtermaßen im wesentlichen halbellipsenförmig bereichsweise ausgebildet. Dabei ist es bevorzugt so vorgesehen, dass die Trennlinie zwischen der im Wesentlichen konvex ausgebildeten Ausnehmung im Streichblechhinterteil und dem im Wesentlichen kongruent konkav ausgebildeten Streichblechvorderteil vom Übergang der Trennlinie in die Streichblechunterkante in Bewegungsrichtung des über das Streichblech fließenden Bodenmaterials schräg nach hinten in eine der Streich-blechvorderkante abgewandte Richtung und zur Streichblechoberkante hin ausgerichtet verläuft, dann in einen bogenförmigen, den Scheitelverlauf einer Ellipse nachempfundenen Verlauf übergeht und dann schräg zur Streichblech-vorderkante und zur Streichblechunterkante ausgerichtet auf die Streichblechvorderkante zuläuft und in diese übergeht.

Bei einem so gearteten Verlauf ist es zu realisieren, dass das Streichblechhinterteil das Streichblechvorderteil bereichsweise zangenartig umgreift, womit das Streichblechvorderteil durch das Streichblechhinterteil örtlich ausgesteift wird.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: ein Ausführungsbeispiel eines Streichbleches in Vollkörperaus-bildung in einer Ansicht auf die Streichblechvorderkante, die Scharspitze und das Scharblatt;
- Fig. 2: eine Seitenansicht auf das Ausführungsbeispiel des Streich-bleches nach Fig. 1 mit der Anlageschiene;
- Fig. 3: eine Draufsicht auf das Ausführungsbeispiel nach Fig. 2;
- Fig. 4: eine zu Fig. 1 analoge Ansicht auf ein alternatives Ausführungs-beispiel eines Streifenbleches in Streifenkörperausbildung, und
- Fig. 5: eine zu Fig. 2 analoge Darstellung des Ausführungsbeispiels nach Fig. 4;

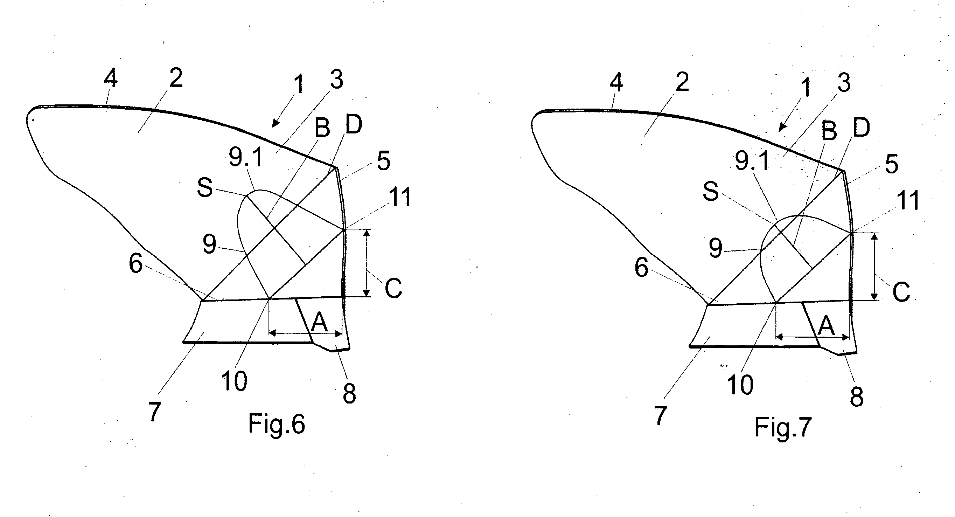

- Fig. 6: eine zu Fig. 1 analoge Darstellung eines Ausführungsbeispieles eines Streichbleches mit geringfügig anderer Kontur des Streichblechvorderteils, und
- Fig. 7: ebenfalls eine zu Fig. 1 analoge Darstellung eines alternativen Ausführungsbeispiels mit einer gegenüber der Fig.6 flacheren Kontur des Streichbleichvorderteils.

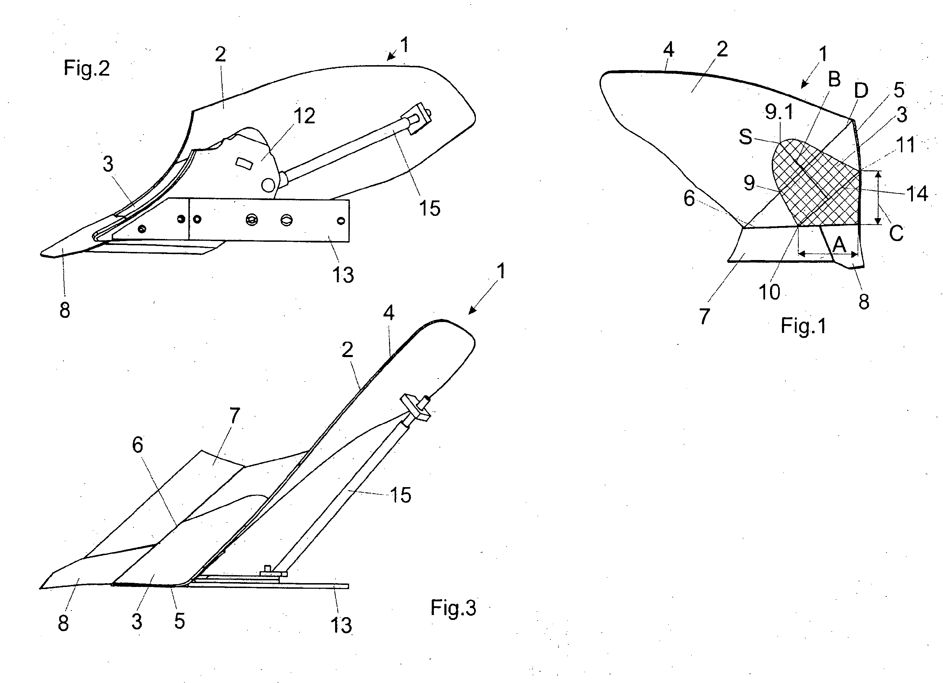

Allgemein mit 1 ist das Streichblech für Pflüge beziffert, das in den Ausführungsbeispielen nach den Fig. 1 bis 3 als Vollkörperblech ausgebildet ist mit einem Streichblechhinterteil 2 und einem Streichblechvorderteil 3. An dem Streichblech 1 ist eine Streichblechoberkante 4, eine Streichblechvorderkante 5 und eine Streichblechunterkante 6 ausgebildet. An die Streichblechunterkante 6 schließt sich ein Scharblatt 7 sowie eine Scharspitze 8 an.

Das Streichblechhinterteil 2 hat eine im Wesentlichen konvex und als Aussparung ausgebildete Ausnehmung 9 mit einer Trennlinie 9.1, die bei 10 in die Streichblechunterkante 6 und bei 11 in die Streichblechvorderkante 5 übergeht. Das Streichblechvorderteil 3 ist im Wesentlichen kongruent zur Ausnehmung 9 konkav ausgebildet, so dass die Trennlinie 9.1 im montierten Zustand des Streichblechhinterteils zwischen dem Streichblechhinterteil 2 und dem Streichblechvorderteil 3 verläuft. Das Streichblechvorderteil 3 ist in die Ausnehmung 9 eingesetzt und als Verschleißteil austauschbar gehaltert, beispielsweise über den Rumpf bzw. den Grundkörper 12, der zusammen mit der Anlageschiene 13 der Fig. 2 zu entnehmen ist. Zwischen dem Übergang 10 der Trennlinie 9.1 in die Streichblechunterkante 6 und dem Übergang 11 der Trennlinie 9.1 in die Streichblechvorderkante 5 verläuft eine gerade Verbindungslinie 14.

Der orthogonale Abstand B zwischen dem Scheitel S der Trennlinie 9.1 der Ausnehmung 9 zwischen dem Streichblechvorderteil 2 und dem Streichblechvorderteil 3 ist im Hinblick auf die Darstellung der Verschleißzonen des Streichblechs 1 auf die Länge der Verbindungslinie 14 abgestimmt und soll mindestens 40% der Länge der Verbindungslinie 14 zwischen den Übergangspunkten 10 und 11 betragen und maximal 100% der Länge. Damit ist das Streichblechvorderteil 3 wesentlich in das Streichblechhinterteil 2 hineinverlaufend ausgebildet und berücksichtigt auch bei höheren Pfluggeschwindigkeiten die stark beanspruchten Zonen des Streichbleches 1 insgesamt.

Die Trennlinie 9.1 hat eine der Form einer Halbellipse angenäherten Verlauf, insbesondere in dem der Scheitel S benachbarten tiefer in dem Streichblechhinterteil 2 gelegenen Zone des Streichblechvorderteils 3. Die Trennlinie 9.1 hat dabei einen Verlauf, der von dem Punkt 10 des Übergangs der Trennlinie 9.1 in die Streichblechunterkante 6 ausgehend schräg nach hinten in eine der Streichblechvorderkante 5 abgewandte Richtung und schräg nach oben zur Streichblechoberkante ausgerichtet verläuft, dann in den in etwa halbelliptischen Bogenbereich unter Einschluss des Scheitels S übergeht und dann wiederum schräg zur Streichblechvorderkante 5 und zur Streich-blechunterkante 6 hin ausgerichtet weiter verläuft und danach bei dem Punkt 11 in die Streichblechvorderkante 5 übergeht. Damit ist sichergestellt, dass das Streichblechhinterteil 2 das Streichblechvorderteil 3 bereichsweise nach Art einer Zange umgreift.

Um ein hinreichendes Maß des Umgreifens durch das Streichblechhinterteil vor-liegen zu haben, entspricht der Abstand A des Punktes 10 des Überganges der Ausnehmung 9 bzw. der Trennlinie 9.1 in die Streichblechunterkante 6 zu der Streichblechvorderkante 5 maximal 85% der Gesamtlänge der Streichblechunterkante 6. Der Abstand C des Punktes 11 des Überganges der Ausnehmung 9 bzw. der Trennlinie 9.1 in die Streichblechvorderkante 5 zu der Streichblechhinterkante 6 entspricht maximal 85% der Gesamtlänge der Streichblechvorderkante 5. Auch der obere Abstand des Punktes des Überganges der Streichblechoberkante 4 in die Streichblechvorderkante 5 ist entsprechend abgestimmt. Daher soll die Länge der Verbindungslinie 14 zwischen den Punkten 10 und 11 ein Maß haben, das zwischen 60 und 75% der Länge der Streichblechunterkante 6 liegt.

Weiterhin überragt das Streichblechvorderteil 3 mit seinem Scheitelpunkt S die gerade Verbindungslinie D zwischen dem Schnittpunkt des hinteren Endes des Scharblattes 7 mit der Streichblechunterkante 6 des Scharblechhinterteiles 2 und dem Schnittpunkt der Streichblechvorderkante 5 mit der Streichblechoberkante 4 zumindest im mittleren Bereich der Verbindungslinie. Der Begriff des Schnittpunktes ist dabei nicht idealisiert zu verstehen, sondern bezieht sich auch auf gerundete Eckbereiche, so dass hierunter ein gedachter Schnittpunkt zu verstehen ist.

Unter dem mittleren Bereich der Verbindungslinie wird zumindest das mittlere Drittel der Länge der Verbindungslinie verstanden. Dieser mittlere Bereich kann bis zu 70% der Länge der Verbindungslinie betragen. Der Abstand des Scheitelpunktes S zur Verbindungslinie beträgt zumindest 5%, vorzugsweise mehr als 10% der Länge der geraden Verbindungslinie zwischen dem Scheitelpunkt S und dem Schnittpunkt zwischen der Unterkante des Scharblechvorderteils 3 und der Vorderkante des Scharblechvorderteils 3.

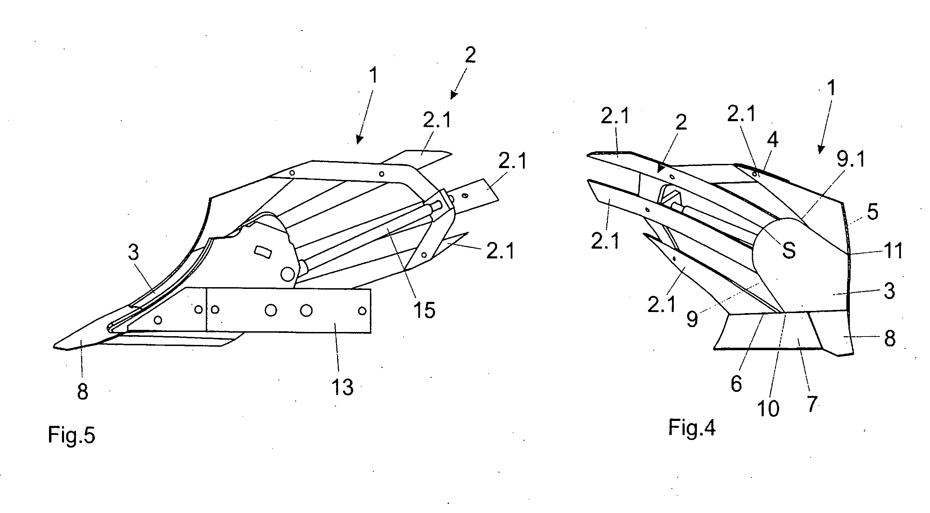

In den Fig. 2 und 3 ist das Ausführungsbeispiel nach Fig. 1 noch weiter veranschaulicht. Hier ist der Rumpf 12 dargestellt, der über eine Halterung mit einem Traggestell des Pflugkörpers verbunden ist. Die Anlageschiene 13 ist an der Furchenwand des zu bearbeitenden Erdbodens anzulegen. Des Weiteren ist das Streichblechhinterteil 2 und das Streichblechvorderteil 3 ersichtlich, ebenso die Scharspitze 8. Bei ansonsten übereinstimmender Ausbildung ist das Ausführungsbeispiel nach Fig. 4 des Streichblechs 1 in Streifenkörperausbildung vorgesehen mit einem hinteren Streichblech 2, das aus mehreren Einzelstreifen 2.1 besteht. Ansonsten ist auch wiederum eine Ausnehmung 9 vorgesehen, in die das Streichblechvorderteil 3 als auswechselbares Verschleißteil 3 eingesetzt ist, wobei auch die Kontur der Trennlinie 9.1 analog ausgebildet ist wie die Trennlinie 9.1 bei dem Ausführungsbeispiel nach Fig. 1.

## Patentansprüche

1. Streichblech (1) für Pflüge in Vollkörper- oder Streifenkörperausbildung mit einem eine Streichblechoberkante (4), eine Streichblechunterkante (6) sowie eine Streichblechvorderkante (5) aufweisenden Streichblechhinterteil (2) mit einer in die Streichblechunterkante (6) und in die Streichblechvorderkante (5) übergehenden Ausnehmung (9), in die ein im Wesentlichen kongruent ausgebildetes Streichblechvorderteil (3) als Austauschteil einsetzbar ist, das im montierten Zustand die Streichblechvorderkante (5) und die Streichblechunterkante (6) des Streichblechhinterteils (2) fortsetzt, **dadurch gekennzeichnet, dass** die Länge des maximalen orthogonalen Abstandes (B) zwischen dem der Streichblechvorderkante (5) abgewandten Scheitel (S) des in die Ausnehmung (9) eingesetzten Streichblechvorderteils (3) zu der Verbindungslinie (14) zwischen dem Übergang (10) der Ausnehmung (9) in die Streichblechunterkante (6) und dem Übergang (11) der Ausnehmung (9) in die Streichblechvorderkante (5) 40% bis 100% der Länge der Verbindungslinie (14) beträgt, und wobei das Streichblechvorderteil (3) mit seinem Scheitelpunkt (S) die gerade Verbindungslinie (D) zwischen dem Schnittpunkt des hinteren Endes des Scharblattes (7) mit der Streichblechunterkante (6) des Scharblechhinterteiles (2) und dem Schnittpunkt der Streichblechvorderkante (5) mit der Streichblechoberkante (4) zumindest im mittleren Bereich der Verbindungslinie überragt.

2. Streichblech nach Anspruch 1, **dadurch gekennzeichnet, dass** die Trennlinie (9.1) zwischen der Ausnehmung (9) und dem im Wesentlichen kongruent ausgebildeten Streichenblechvorderteil (3) zwischen dem Übergang (10) der Ausnehmung (9) in die Streichblechunterkante (6) und dem Übergang (11) der Ausnehmung (9) in die Streichblechvorderkante(5) im wesentlichen halbellipsenförmig verläuft.

3. Streichblech nach Anspruch 1 oder 2, **dadurch gekennzeichnet, dass** die Trennlinie (9.1) zwischen der Ausnehmung (9) im Streichblechhinterteil (2) und dem im Wesentlichen kongruent ausgebildeten Streichblechvorderteil (3) vom Übergang (10) der Trennlinie (9.1) in die Streichblechunterkante (6) in Bewegungsrichtung des über das Streichblech (1) fließenden Bodenmaterials schräg nach hinten in eine der Streichblechvorderkante (5) abgewandte Richtung und zur Streichblechoberkante (4) hin ausgerichtet verläuft, dann in einen bogenförmigen Verlauf übergeht und dann schräg zur Streichblechvorderkante (5) und zur Streichblechunterkante ausgerichtet auf die Streichblechvorderkante (5) zuläuft und in diese übergeht.

4. Streichblech für Pflüge nach einem der Ansprüche 1 bis 3, **dadurch gekennzeichnet, dass** das Streichblechhinterteil (2) das Streichblechvorderteil (3) bereichsweise zangenartig umgreift.

5. Streichblech nach einem der Ansprüche 1 bis 4, **dadurch gekennzeichnet, dass** der Abstand (A) des Überganges (10) der Ausnehmung (9) in die Streichblechunterkante (6) zu der Streichblechvorderkante (5) maximal 85% der Gesamtlänge der Streichblechunterkante (6) beträgt.

6. Streichblech nach einem der Ansprüche 1 bis 5, **dadurch gekennzeichnet, dass** die Länge der Verbindungslinie zwischen dem Übergang (10) der Ausnehmung (9) des Streichblechhinterteils (2) in die Streichblechunterkante (6) und des Übergangs (11) der Ausnehmung (9) des Streichblechhinterteils (2) in die Streichblechvorderkante (5) zwischen 60% und 75% der Länge der Streichblechunterkante beträgt.

7. Streichblech für Pflüge nach einem der Ansprüche 1 bis 6, **dadurch gekennzeichnet, dass** das Streichblechvorderteil (3) aus einem verschleißfesten Stahlmaterial besteht.

8. Streichblech für Pflüge nach einem der Ansprüche 1 bis 7, **dadurch gekennzeichnet, dass** das Streichblechvorderteil (3) aus einem verschleißfesten Kunststoffmaterial besteht.

9. Pflug zur Bodenbearbeitung **gekennzeichnet durch** ein Streichblech in Vollkörper- oder Streifenkörperausbildung nach einem der Patentansprüche 1 bis 8.

## Claims

1. Mouldboard (1) for ploughs, of solid-body or strip-body design, with a mouldboard rear part (2) having a mouldboard upper edge (4), a mouldboard lower edge (6) and a mouldboard front edge (5), with a recess (9) which merges into the mouldboard lower edge (6) and into the mouldboard front edge (5) and into which a mouldboard front part (3) of substantially congruent design is insertable as an interchangeable part which, in the fitted state, continues the mouldboard front edge (5) and the mouldboard lower edge (6) of the mouldboard rear part (2), **characterized in that** the length of the maximum orthogonal distance (B) between the apex (S), which faces away from the mouldboard front edge (5), of the mouldboard front part (3), which is inserted into the recess (9), and the connecting line (14) between the transition (10) of the recess (9) into the mouldboard lower edge (6) and the transition (11) of the recess (9) into the mouldboard front edge (5) is 40% to 100% of the length of the connecting line (14), and wherein the apex point (S) of the mouldboard front part (3) protrudes over the rectilinear connecting line (D) between the intersecting point of the rear end of the share blade (7) with the mouldboard lower edge (6) of the mouldboard rear part (2) and the intersecting point of the mouldboard front edge (5) with the mouldboard upper edge (4), at least in the central region of the connecting line.

2. Mouldboard according to Claim 1, **characterized in that** the separating line (9.1) between the recess (9) and the mouldboard front part (3), which is of substantially congruent design, runs substantially semi-elliptically between the transition (10) of the recess (9) into the mouldboard lower edge (6) and the transition (11) of the recess (9) into the mouldboard front edge (5).

3. Mouldboard according to Claim 1 or 2, **characterized in that** the separating line (9.1) between the recess (9) in the mouldboard rear part (2) and the mouldboard front part (3), which is of substantially congruent design, runs obliquely rearwards from the transition (10) of the separating line (9.1) into the mouldboard lower edge (6) in the direction of movement of the soil material flowing over the mouldboard (1) in a direction facing away from the mouldboard front edge (5) and oriented towards the mouldboard upper edge (4), then merges into a curved profile and then, oriented obliquely with respect to the mouldboard front edge (5) and with respect to the mouldboard lower edge, converges with the mouldboard front edge (5) and merges into the latter.

4. Mouldboard for ploughs according to one of Claims 1 to 3, **characterized in that** the mouldboard rear part (2) engages around the mouldboard front part (3) in regions in the manner of tongs.

5. Mouldboard according to one of Claims 1 to 4, **characterized in that** the distance (A) of the transition (10) of the recess (9) into the mouldboard lower edge (6) from the mouldboard front edge (5) is at maximum 85% of the overall length of the mouldboard lower edge (6).

6. Mouldboard according to one of Claims 1 to 5, **characterized in that** the length of the connecting line between the transition (10) of the recess (9) of the mouldboard rear part (2) into the mouldboard lower edge (6) and the transition (11) of the recess (9) of the mouldboard rear part (2) into the mouldboard front edge (5) is between 60% and 75% of the length of the mouldboard lower edge.

7. Mouldboard for ploughs according to one of Claims 1 to 6, **characterized in that** the mouldboard front part (3) is composed of a wear-resistant steel material.

8. Mouldboard for ploughs according to one of Claims 1 to 7, **characterized in that** the mouldboard front part (3) is composed of a wear-resistant plastics material.

9. Plough for soil cultivation, **characterized by** a mouldboard of solid-body or strip-body design according to one of Patent Claims 1 to 8.

## Revendications

1. Versoir (1) pour charrues de configuration à corps de labour plein ou à corps de labour à claire-voie avec une partie arrière de versoir (2) présentant un bord supérieur de versoir (4), un bord inférieur de versoir (6) ainsi qu'un bord avant de versoir (5) avec un évidement (9) se transformant en le bord inférieur de versoir (6) et le bord avant de versoir (5), dans lequel évidement il est possible de mettre en place une partie avant de versoir (3) sensiblement réalisée de manière congruente en tant que pièce de rechange qui prolonge, à l'état monté, le bord avant de versoir (5) et le bord inférieur de versoir (6) de la partie arrière de versoir (2), **caractérisé en ce que** la longueur de l'écartement (B) orthogonal maximal entre le sommet (S) tournant le dos au bord avant de versoir (5) de la partie avant de versoir (3) mise en place dans l'évidement (9) et la ligne de liaison (14) entre la transition (10) de l'évidement (9) vers le bord inférieur de versoir (6) et la transition (11) de l'évidement (9) vers le bord avant de versoir (5) est de 40% à 100% de la longueur de la ligne de liaison (14), et dans lequel la partie avant de versoir (3) dépasse avec son point culminant (S) la ligne de liaison (D) rectiligne entre le point d'intersection de l'extrémité arrière de la lame de soc (7) avec le bord inférieur de versoir (6) de la partie arrière de soc (2) et le point d'intersection du bord avant de versoir (5) avec le bord supérieur de versoir (4) au moins dans la partie médiane de la ligne de liaison.

2. Versoir selon la revendication 1, **caractérisé en ce que** la ligne de séparation (9.1) entre l'évidement (9) et la partie avant de versoir (3) sensiblement réalisée de manière congruente s'étend entre la transition (10) de l'évidement (9) vers le bord inférieur de versoir (6) et la transition (11) de l'évidement (9) vers le bord avant de versoir (5) sensiblement selon une forme semi-elliptique.

3. Versoir selon la revendication 1 ou 2, **caractérisé en ce que** la ligne de séparation (9.1) entre l'évidement (9) dans la partie arrière de versoir (2) et la partie avant de versoir (3) sensiblement réalisée de manière congruente s'étend depuis la transition (10) de la ligne de séparation (9.1) vers le bord inférieur de versoir (6) en direction de déplacement du matériau du sol coulant sur le versoir (1), en biais vers l'arrière dans une direction tournant le dos au bord avant de versoir (5) et de manière orientée vers le bord supérieur de versoir (4), et se transforme ensuite en un tracé en forme d'arc et converge ensuite vers le bord avant de versoir (5), de manière orientée en biais par rapport au bord avant de versoir (5) et au bord inférieur de versoir, en se transformant ensuite en celui-ci.

4. Versoir pour charrues selon l'une des revendications 1 à 3, **caractérisé en ce que** la partie arrière de versoir (2) entoure partiellement à la manière d'une pince la partie avant de versoir (3).

5. Versoir selon l'une des revendications 1 à 4, **caractérisé en ce que** l'écartement (A) entre la transition (10) de l'évidement (9) vers le bord inférieur de versoir (6) et le bord avant de versoir (5) est au maximum de 85% de la longueur totale du bord inférieur de versoir (6).

6. Versoir selon l'une des revendications 1 à 5, **caractérisé en ce que** la longueur de la ligne de liaison entre la transition (10) de l'évidement (9) de la partie arrière de versoir (2) vers le bord inférieur de versoir (6) et la transition (11) de l'évidement (9) de la partie arrière de versoir (2) vers le bord avant de versoir (5) est comprise entre 60% et 75% de la longueur du bord inférieur de versoir.

7. Versoir pour charrues selon l'une des revendications 1 à 6, **caractérisé en ce que** la partie avant de versoir (3) se compose d'un matériau d'acier résistant à l'usure.

8. Versoir pour charrues selon l'une des revendications 1 à 7, **caractérisé en ce que** la partie avant de versoir (3) se compose d'un matériau en plastique résistant à l'usure.

9. Charrue pour travailler le sol, **caractérisée par** un versoir de configuration à corps de labour plein ou à corps de labour à claire-voie selon l'une des revendications 1 à 8.
